(19) Europäisches Patentamt

European Patent Office

Office européen des brevets

(11) Veröffentlichungsnummer: **0 178 698**
**B1**

(12) **EUROPÄISCHE PATENTSCHRIFT**

(45) Veröffentlichungstag der Patentschrift:
**27.04.88**

(21) Anmeldenummer: **85201355.6**

(22) Anmeldetag: **27.08.85**

(51) Int. Cl.⁴: **B 03 C 3/00,** B 03 C 3/60,
B 03 C 3/01, B 01 D 53/36

(54) **Vorrichtung zur Abgasreinigung.**

(30) Priorität: **29.09.84 DE 3435953**

(43) Veröffentlichungstag der Anmeldung:
**23.04.86 Patentblatt 86/17**

(45) Bekanntmachung des Hinweises auf die Patenterteilung:
**27.04.88 Patentblatt 88/17**

(84) Benannte Vertragsstaaten:
**AT DE IT NL**

(56) Entgegenhaltungen:
**CH-A-351 257**
**DE-A-3 227 046**
**US-A-2 356 717**
**US-A-3 523 407**
**US-A-4 251 239**

(73) Patentinhaber: **METALLGESELLSCHAFT AG,
Reuterweg 14 Postfach 3724, D-6000 Frankfurt/M.1
(DE)**

(72) Erfinder: **Weber, Ekkehard, Prof. Dr., Amselweg 6,
D-4300 Essen 17 (DE)**
Erfinder: **Wiggers, Helmut, Dr., Am Kölnischen
Wald 31 a, D-4250 Bottrop (DE)**

(74) Vertreter: **Rieger, Harald, Dr., Reuterweg 14,
D-6000 Frankfurt am Main (DE)**

## Beschreibung

Die Erfindung bezieht sich auf eine Vorrichtung zur Abgasreinigung, wobei die Entstaubung mittels elektrostatischem Staubabscheider und die Entfernung von Stickoxiden mittels in den Gasstrom eingedüstem Ammoniak oder dergleichen und im Gasstrom ortsfest angeordnetem Katalysatormaterial erfolgt.

Verglichen mit der schon seit Jahrzehnten industriell erfolgreich praktizierten Entstaubung von Abgasen, steht man bei der Entfernung gasförmiger Schadstoffe aus Abgasen erst am Anfang der Entwicklung und es ist noch nicht abzusehen, welche der zahlreichen vorgeschlagenen Verfahren sich wirtschaftlich durchsetzen werden. Bei Abgasen aus der Verbrennung von Kohle oder Erdöl steht die Entfernung von $SO_2$ und $NO_x$ im Vordergrund. Für die $SO_2$-Entfernung wird in der überwiegenden Zahl der Fälle eine Adsorption an Kalk oder Kalkverbindungen bei relativ niedrigen Temperaturen vorgeschlagen, wobei die Adsorbentien entweder als Aufschlämmung (nasses Verfahren) oder als feinkörniges Granulat (trockenes Verfahren) in den Abgasstrom eingebracht und danach als $CaSo_3$ und $CaSO_4$ aus diesem wieder abgeschieden werden.

Für die $NO_x$-Entfernung wird meist eine Umsetzung mit ammoniakhaltigen Stoffen bei verhältnismäßig hohen Temperaturen vorgzschlagen, wobei zur Verbesserung der Umsetzung Katalysatoren vorgesehen werden, die entweder als Schicht, Bett, Platten, Waben oder dergleichen im Gasstrom ortsfest angeordnet sind (vergl. US-A-4 251 239) oder aber auch als Granulat in den Gasstrom eingebracht und danach wieder abgeschieden werden. Ortsfest angeordnete Katalysatoren können sowohl mit staubhaltigen, als auch mit gereinigten Gasen beaufschlagt werden. Beide $NO_x$-Reinigungssysteme haben ihre Vorteile, geben sich aber im Prinzip nichts gegeneinander nach.

Der Erfindung liegt die Aufgabe zugrunde, eine Vorrichtung der eingangs genannten Art vorzuschlagen, mit der sowohl die Entstaubung, als auch die Entfernung von Stickoxiden einerseits mit möglichst geringem apparativen Aufwand, andererseits aber mit möglichst gutem Wirkungsgrad erfolgen kann.

Diese Aufgabe wird erfindungsgemäß dadurch gelöst, daß bei einer gattungsmäßigen Vorrichtung die flächigen und gasundurchlässigen Niederschlagselektroden des elektrostatischen Staubabscheiders teilweise oder ganz mit Katalysatormaterial beschichtet sind oder teilweise oder ganz aus Katalysatormaterial bestehen.

Es ist zwar schon vorgeschlagen worden, bei der Reinigung von Stickoxidverbindungen enthaltenden Abgasen aus Schwefelsäurefabriken Elektrofilter mit an den positiven Pol der Hochspannungsversorgung angeschlossenen Sprühelektroden zu verwenden (DE-AS 10 85 138). Dabei ging es aber nicht darum, Stickoxide zu entfernen, sondern die Bildung zusätzlicher Stickoxidverbindungen bei den im Elektrofilter zwangsläufig auftretenden Überschlägen zu vermeiden und lediglich die Schwefelsäurenebel abzuscheiden.

Dieses Verfahren ist also mit dem hier angemeldeten in keinster Form vergleichbar.

Auch andere Verfahren zur katalytischen $NO_x$-Abscheidung, wie sie heute vielfach vorgeschlagen und auch eingesetzt werden, besitzen nicht die Vorteile der hier angemeldeten Methode dergestalt, daß sie zumeist eigene Vorrichtungen zur Unterbringung der Katalysatoren benötigen.

Demgegenüber hat die erfindungsgemäße Vorrichtung den Vorteil, daß

- die Katalyse in einem elektrischen Feld erfolgt, das sich bekannterweise günstig auf die katalytische Effektivität auswirkt,
- durch Aufbringung des katalytischen Materials auf die Niederschlagselektroden eines Elektrofilters werden keine weiteren Apparate erforderlich, so daß also in einem Abscheider gleichzeitig zwei Gasreinigungsmaßnahmen, nämlich die $NO_x$-, wie auch die Feststoffabscheidung erfolgen.

Die Aufbringung der Katalysatorelemente in Form von dünnen Platten, von Folien usw. kann auf sämtliche Niederschlagselektroden aller elektrischen Felder erfolgen. Bei hohen Anfangsstaubkonzentrationen wird man zumindest das in Strömungsrichtung gesehene letzte Feld eines mehrfeldrigen elektrostatischen Staubabscheiders mit Niederschlagselektroden ausrüsten, die ganz oder teilweise mit Katalysatormaterial beschichtet sind oder aus katalytischem Material bestehen.

Da diese so gestalteten Niederschlagselektroden ebenfalls zur Staubabscheidung dienen, wird sich auf diesen der abgeschiedene Staub niederschlagen. Sie müssen daher von Fall zu Fall abgereinigt werden, was je nach Einsatzbereich des katalytisch wirkenden Elektrofilters in bekannter Weise mechanisch oder durch spezielle Waschflüssigkeiten geschehen kann.

Die erfindungegemäße Vorrichtung wird komplettiert durch eine Einrichtung zum Eindüsen von Ammoniak in den Gasstrom, die in Strömungsrichtung vor dem Bereich mit Katalysatormaterial angeordnet ist. Ein so ausgestattetes Elektrofiler kann, abhängig vom Katalysatormaterial und dessen Effektivität, an verschiedenen Stellen im Kraftwerksprozeß eingesetzt werden. Erfindungegemäß wird die Vorrichtung eine Betriebetemperatur von 40 bis 500°C beanspruchen.

## Patentansprüche

Vorrichtung zur Abgasreinigung, wobei die Entstaubung mittels elektrostatischem Staubabscheider und die Entfernung von Stickoxiden mittels in den Gasstrom eingedüstem Ammoniak und im Gasstrom ortsfest angeordnetem Katalysatormaterial erfolgt, dadurch gekennzeichnet, daß die flächigen und gasundurchlässigen Niederschlagselektroden des elektrostatischen Staubabscheiders ganz oder teilweise mit Katalysatormaterial beschichtet sind oder aus Katalysatormaterial bestehen.

2. Vorrichtung nach Anspruch 1, <u>dadurch gekennzeichnet</u>, daß die Niederschlagselektroden aus keramischen, mit aktiven Komponenten versetzten Materialien bestehen, oder daß auf Metallplatten aktive Stoffe in irgendeiner Form aufgebracht und evtl. keramisiert werden, oder daß Platten auf die metallischen Niederschlagselektroden aufgeklebt oder daß katalytisches Material, zu Folien verarbeitet, aufgeklebt wird.

3. Vorrichtung nach Anspruch 1 und 2, <u>dadurch gekennzeichnet</u>, daß die Niederschlagselektroden aller Felder, zumindest aber die des in Strömungsrichtung gesehenen letzten Feldes, teilweise oder ganz mit katalytischem Material beschichtet sind oder teilweise oder ganz aus Katalysatormaterial bestehen.

4. Vorrichtung nach Anspruch 1, 2 und 3, <u>dadurch gekennzeichnet</u>, daß die Abreinigung der katalytiech wirkenden Niederschlagselektroden mechanisch oder durch spezielle, katalysatorgünstige waschverfahren erfolgt.

5. Vorrichtung nach einem der Ansprüche 1 bis 4, <u>dadurch gekennzeichnet</u>, daß eine Einrichtung zum Eindüsen von Ammoniak in den Gasstrom in Strömungsrichtung vor dem Bereich mit Katalysatormaterial angeordnet ist.

8. Vorrichtung nach einem der Ansprüche 1 bis 5, <u>dadurch gekennzeichnet</u>, daß das Elektrofilter im Temperaturbereich von 40 bis 500°C arbeitet.

7. Vorrichtung nach einem der Ansprüche 1 bis 8, <u>dadurch gekennzeichnet</u>, daß das katalytisch wirkende Elektrofilter zwischen Economiser und Luvo oder zwischen Luvo und Rauchgasentschwefelungsanlage oder nach der Rauchgasentschwefelungsanlage angeordnet ist.

## Claims

1. Apparatus for purifying exhaust gas, wherein dust is collected by a dust-collecting electrostatic precipitator and nitrogen oxides are removed by means of ammonia which is injected into the gas stream and by means of stationary catalyst material disposed in the gas stream, characterized in that the collecting electrodes of the dust-collecting electrostatic precipitator are gas-permeable sheet electrodes and are coated with or consist of catalytic material entirely or in part.

2. Apparatus according to claim 1, characterized in that the collecting electrodes consist of ceramic materials to which active components have been added, or active substances in any desired form have bean applied to metal plates and optionally have been converted to ceramics, or plates have been adhesively joined to the metallic collecting electrodes or catalytic matertal formed into sheeting has been adhesively bonded.

3. Apparatus according to claims 1 and 2, characterized in that the collecting electrodes of all fields, but at least those of the last field in the direction of flow, are coated in part or entirely with catalytic material or consist in part or entirely of catalyst material.

4. Apparatus according to claims 1, 2 and 3, characterized in that the catalytically acting collecting electrodes are cleaned mechanically or by special washing processes which are favourable for the catalyst.

5. Apparatus according to any of claims 1 to 4, characterized in that means for injecting ammonia into the gas stream in the direction of flow precede the region in which catalyst material is provided.

6. Apparatus according to any of claims 1 to 5, characterized in that the electrostatic precipitator operates in the temperature range from 40 to 500°C.

7. Apparatus according to any of claims 1 to 6, characterized in that the catalytically acting electrostatic precipitator is provided between the economizer and the air preheater or between the air preheater and the flue gas desulphurizer or behind the flue gas desulohurizer.

## Revendications

1. Installation d'épuration d'effluents gazeux, le dépoussiérage s'effectuant au moyen d'un séparateur électrostatique de poussière, et l'élimination des oxydes d'azote étant opérée au moyen d'ammoniac projeté dans le courant gazeux et d'un matériau servant de catalyseur disposé à poste fixe dans le courant gazeux, caractérisée en ce que les électrodes de précipitation du séparateur de poussière électrostatique, qui sont minces et qui sont imperméables au gaz, sont revêtues, en tout ou partiejd'un matériau servant de catalyseur ou sont constituées en du matériau servant de catalyseur.

2. Installation suivant la revendication 1, caractérisée en ce que les électrodes de précipitation sont en des matériaux céramiques mélangés à des constituants actifs ou en ce que des substances actives sont déposées sous n'importe quelle forme sur des plaques métalliques, et le cas échéant, sont céramisées, ou en ce que des plaques sont collées sur des électrodes métalliques de précipitation, ou en ce que du matériau catalytique transformé en feuilles est collé.

3. Installation suivant la revendication 1 ou 2, caractérisée en ce que les électrodes précipitation de tous les champs, ou du moins celles du dernier champ considéré dans le sens de l'écoulement, sont recouvertes, en tout ou partie, d'un matériau catalytique, ou sont constituées, en tout ou partie, d'un matériau servant de catalyseur.

4. Installation suivant la revendication 1, 2 ou 3, caractérisée en ce que le nettoyage des électrodes de précipitation à effet catalytique s'effectue mécaniquement ou par un procédé de lavage particulier ménageant le catalyseur.

5. Installation suivant l'une des revendications 1 à 4, caractérisée en ce qu'un dispositif de projection d'ammoniac dans le courant gazeux est monté en amont, suivant la direction d'écoulement, de la région ayant le matériau servant de catalyseur.

6. Installation suivant l'une des revendications 1 à 5, caractérisée en ce Fe l'électrofiltre opère dans une plage de température de 40 à 500°C.

7. Installation suivant l'une des revendications 1 à 6, caractérisée en ce que l'électrofiltre à effet catalytique est interposé entre l'économiseur et le réchauffeur d'air, ou entre le réchauffeur d'air et l'installation de désulfuration des gaz de carneau, ou en aval de l'installation de désulfuration des gaz de carneau.